# EUROPEAN PATENT SPECIFICATION

(11) **EP 3 378 816 B1**
(45) Date of publication and mention of the grant of the patent: **13.05.2020**
(21) Application number: 18159142.1
(22) Date of filing: 28.02.2018
(51) Int. Cl.: B65H 63/06, G01B 7/12

(54) **YARN WINDING MACHINE**
GARNWICKLUNGSMASCHINE
MACHINE D'ENROULEMENT DE FIL

(30) Priority: 24.03.2017 JP 2017059714
(43) Date of publication of application: 26.09.2018
(73) Proprietor: Murata Machinery, Ltd., Kyoto-shi, Kyoto 601-8326 (JP)
(72) Inventor: KAWAMOTO, Kenji, Kyoto, 612-8686 (JP)
(74) Representative: Hoffmann Eitle

(56) References cited:
- EP-A2- 2 687 469
- WO-A1-2011/038524
- CN-A- 103 484 990

## Description

### BACKGROUND OF THE INVENTION

### 1. Field of the Invention

The present invention relates to a yarn winding machine.

### 2. Description of the Related Art

A yarn winding machine including a yarn supplying device adapted to supply a yarn, a winding device adapted to wind the yarn supplied from the yarn supplying device to form a package, and a yarn monitoring device adapted to monitor a state of the travelling yarn is conventionally known (see e.g., Japanese Laid-Open Patent Publication No. 2014-19541).

The yarn monitoring device includes, for example, a capacitance sensor adapted to detect a thickness from the state of the yarn, and is adapted to monitor the state of the yarn based on a detection result of the sensor.

In the yarn winding machine described above, the yarn travels between the yarn supplying device and the package while being guided at a plurality of locations. Thus, the yarn is electrically charged by contact and/or friction with the guide member, and static electricity may remain in the yarn. In this case, when the static electricity influences a detection accuracy of the state of the yarn by the capacitance sensor, a monitoring accuracy of the yarn monitoring device may lower.
Another example of prior art can be seen in document EP 2 687 469 A2.

### BRIEF SUMMARY OF THE INVENTION

According to one aspect of the present invention, it is an object to provide a yarn winding machine capable of enhancing a monitoring accuracy in the yarn monitoring device.

A yarn winding machine according to one aspect of the present invention includes a yarn supplying device adapted to supply a yarn; a winding device adapted to wind the yarn supplied from the yarn supplying device to form a package; a yarn monitoring device including a capacitance sensor adapted to detect a state of the yarn, and adapted to monitor a state of the travelling yarn using a detection result of the sensor; an acquiring device adapted to acquire information relating to a charge amount of the yarn; and a control device adapted to reflect the information relating to the charge amount of the yarn acquired by the acquiring device on a monitoring process of the yarn monitoring device.

The yarn winding machine according to one aspect of the present invention includes an acquiring device adapted to acquire the information relating to the charge amount of the yarn. The control device reflects the information relating to the charge amount of the yarn acquired by the acquiring device on the monitoring process of the yarn monitoring device. Thus, in the yarn winding machine, the state of the yarn can be monitored in view of an influence the static electricity remaining in the yarn has on the detection accuracy of the state of the yarn by the capacitance sensor, and the monitoring accuracy in the yarn monitoring device can be enhanced.

According to the invention, the information relating to the charge amount of the yarn is at least one of a tension value of the travelling yarn, a tension applying state by a tension applying device adapted to apply tension on the yarn, a humidity of a periphery of the yarn monitoring device, and a type of the yarn. In this configuration, the information related to a factor that influences the charge amount of the yarn is acquired as the information relating to the charge amount of the yarn, and hence the state of the yarn can be appropriately monitored.

According to the invention, the control device is configured to correct the state of the yarn detected by the sensor based on the information relating to the charge amount of the yarn. In this configuration, a thickness of the yarn can be detected with satisfactory accuracy by correcting the state of the yarn Y detected by the capacitance sensor based on the information relating to the charge amount of the yarn.

In one embodiment, the yarn monitoring device may detect a yarn defect of the yarn based on the state of the yarn detected by the sensor, and the control device may change a threshold value related to a determination of a yarn defect detection by the yarn monitoring device based on the information relating to the charge amount of the yarn. In this configuration, the yarn defect can be detected with satisfactory accuracy by changing the threshold value of the yarn defect detection by the yarn monitoring device based on the information relating to the charge amount of the yarn.

A yarn winding machine according to an embodiment not forming part of the present invention includes a yarn supplying device adapted to supply a yarn; a winding device adapted to wind the yarn supplied from the yarn supplying device to form a package; a yarn monitoring device including a capacitance sensor adapted to detect a state of the yarn, and adapted to monitor the state of the travelling yarn using a detection result of the sensor; and a neutralizing means adapted to neutralize the yarn at upstream in a travelling direction of the yarn with respect to the yarn monitoring device.

The yarn winding machine according to this embodiment includes a neutralizing means adapted to neutralize the yarn at upstream in a travelling direction of the yarn with respect to the yarn monitoring device. Thus, in the yarn winding machine, the static electricity remaining in the yarn can be suppressed from influencing the monitoring accuracy of the yarn monitoring device, and the monitoring accuracy in the yarn monitoring device can be enhanced.

According to one aspect of the present invention, the monitoring accuracy in the yarn monitoring device can be enhanced.

### BRIEF DESCRIPTION OF THE DRAWINGS

FIG. 1 is a front view of an automatic winder according to one embodiment;
FIG. 2 is a side view of a winding unit; and
FIG. 3 is a block diagram illustrating a configuration of a yarn monitoring device.

### DETAILED DESCRIPTION OF PREFERRED EMBODIMENT

Preferred embodiments of the present invention will be hereinafter described in detail with reference to the accompanied drawings. The same or corresponding components are denoted with the same reference numerals in the description of the drawings, and the redundant description will be omitted.

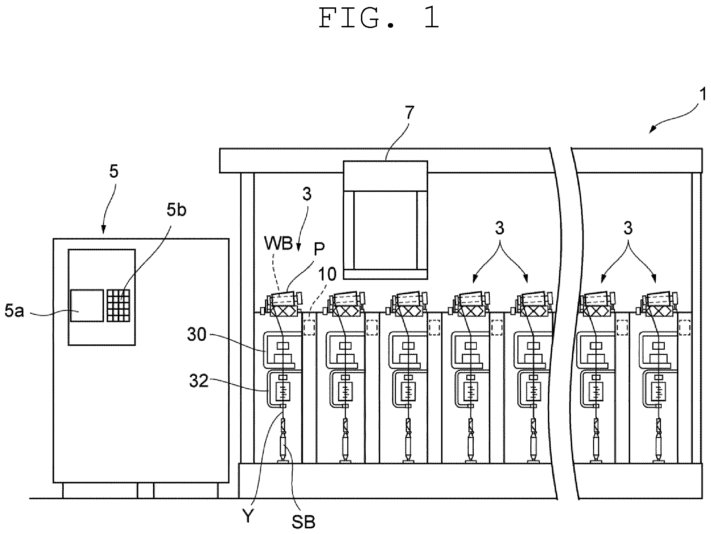

As illustrated in FIG. 1, an automatic winder (yarn winding machine) 1 includes a plurality of yarn winding units 3 arranged in line, a machine control device 5, and a doffing device 7.

The machine control device 5 is adapted to be communicable with each of the plurality of winding units 3. An operator of the automatic winder 1 can appropriately operate the machine control device 5 to collectively manage the plurality of winding units 3. The machine control device 5 includes a display screen 5a and an input key 5b. The display screen 5a is capable of displaying information relating to set contents and/or status, or the like of the winding units 3. An operator can perform a setting operation of the winding units 3 by performing an appropriate operation with the input key 5b.

Each winding unit 3 winds a yarn Y around a winding bobbin WB while traversing the yarn Y, while unwinding the yarn Y from a yarn supplying bobbin SB. The winding unit 3 forms a package P as described above.

When the package P is fully wound (state in which a defined amount of yarn is wound) in each winding unit 3, the doffing device 7 is traveled to a position of the relevant winding unit 3, and removes the fully-wound package and sets an empty winding bobbin WB.

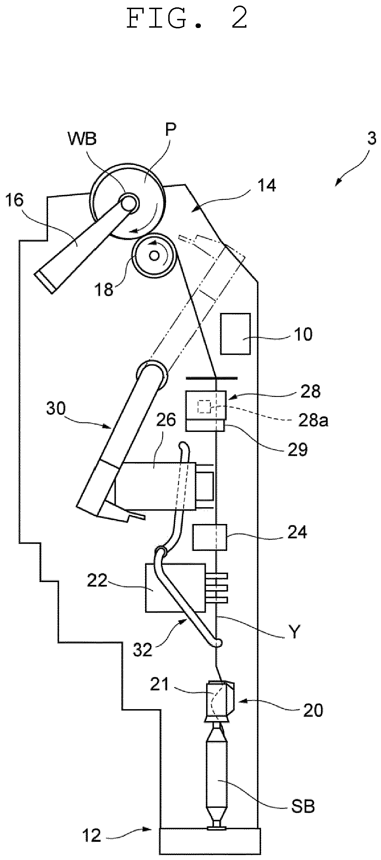

Next, a configuration of the winding unit 3 will be described with reference to FIG. 2. As illustrated in FIG. 2, each winding unit 3 includes a unit control section 10, a yarn supplying device 12, and a winding device 14.

The unit control section 10 includes, for example, a Central Processing Unit (CPU), and a Read Only Memory (ROM) . The ROM stores a program for controlling each structure of the winding unit 3. The CPU executes the program stored in the ROM.

The yarn supplying device 12 is a supporting mechanism adapted to support the yarn supplying bobbin SB placed on a conveying tray (not illustrated) at a predetermined position. The yarn Y is thereby unwound from the yarn supplying bobbin SB, and the yarn Y is pulled out from the yarn supplying bobbin SB. The yarn supplying device 12 thereby supplies the yarn Y. The yarn supplying device 12 is not limited to a conveying tray type and, for example, may be a magazine type.

The winding device 14 includes a cradle 16 and a winding drum 18. The cradle 16 includes a pair of rotation supporting sections (not illustrated). The cradle 16 sandwiches the winding bobbin WB with the rotation supporting section to rotatably support the winding bobbin WB (or package P). The cradle 16 can be switched between a state of bringing the supporting package P into contact with the winding drum 18 and a state of moving the package P away from the winding drum 18.

The winding drum 18 traverses the yarn Y at a surface of the package P and rotates the package P. The winding drum 18 is rotatably driven by a drum driving motor (not illustrated). The package P is driven and rotated by rotatably driving the winding drum 18 with an outer periphery of the package P making contact with the winding drum 18. A spiral shaped traverse groove is formed on an outer peripheral surface of the winding drum 18. The yarn Y unwound from the yarn supplying bobbin SB is wound on the surface of the package P while being traversed at a constant width by the traverse groove. The package P having a constant winding width thus can be formed.

Each winding unit 3 includes an unwinding assisting device 20, a tension applying device 22, a tension detecting device (acquiring device) 24, a yarn joining device 26, and a yarn monitoring device 28 arranged in this order from the yarn supplying device 12 on a yarn travelling path between the yarn supplying device 12 and the winding device 14. A first catching and guiding device 30 and a second catching and guiding device 32 are arranged in proximity to the yarn joining device 26.

The unwinding assisting device 20 includes a regulating member 21 that can be placed over a core tube of the yarn supplying bobbin SB. The regulating member 21 has a substantially tubular shape, and is arranged to make contact with a balloon formed at an upper part of a yarn layer of the yarn supplying bobbin SB. The balloon is a portion where the yarn Y unwound from the yarn supplying bobbin SB is swung by a centrifugal force. When the regulating member 21 is brought into contact with the balloon, it makes contact with the yarn Y of the portion of the balloon thus preventing the yarn Y from being excessively swung. The yarn Y thus can be appropriately unwound from the yarn supplying bobbin SB.

The tension applying device 22 applies a predetermined tension on the travelling yarn Y. In the present embodiment, the tension applying device 22 is a gate-type tension applying device in which movable comb teeth are arranged with respect to fixed comb teeth. The comb teeth on the movable side are urged so that the comb teeth mesh with each other. The tension applying device 22 applies the tension on the yarn Y by causing the yarn Y to pass between the comb teeth in the meshed state while being bent. The comb teeth are, for example, configured by ceramic, and the like. The operation of the tension applying device 22 is controlled by the unit control section 10.

The tension detecting device 24 detects (measures) a tension value of the travelling yarn Y between the yarn supplying device 12 and the winding device 14. The tension detecting device 24 includes, for example, a load cell (not illustrated) . The tension detecting device 24 detects the tension value of the yarn Y based on an electric signal corresponding to the distortion of the load cell generated by the tension of the yarn Y. The tension detecting device 24 outputs a tension measurement signal indicating the tension value of the yarn Y to the unit control section 10.

The unit control section 10 acquires a set value of the tension to apply to the yarn Y, and controls the operation of the tension applying device 22 based on the set value. The set value of the tension is set, for example, for every lot in the machine control device 5. The unit control section 10 acquires the tension value of the yarn Y from a detection result of the tension detecting device 24, and controls the operation of the tension applying device 22 so that the tension value becomes the set value.

When the yarn Y is in a disconnected state for some reason between the yarn supplying device 12 and the winding device 14, the yarn joining device 26 joins the yarn Y (lower yarn) from the yarn supplying device 12 and the yarn Y (upper yarn) from the winding device 14. In the present embodiment, the yarn joining device 26 is configured as a splicer device adapted to twist yarn ends by a whirling airflow generated by compressed air.

The yarn monitoring device 28 monitors the state of the yarn Y travelling on a yarn path, and detects presence/absence of a yarn defect based on the monitored information. The yarn monitoring device 28 detects a thickness abnormality of the yarn Y and/or a foreign substance included in the yarn Y, for example, as the yarn defect. Furthermore, the yarn monitoring device 28 also detects yarn breakage, that is, presence/absence of the yarn Y in the yarn path, and the like.

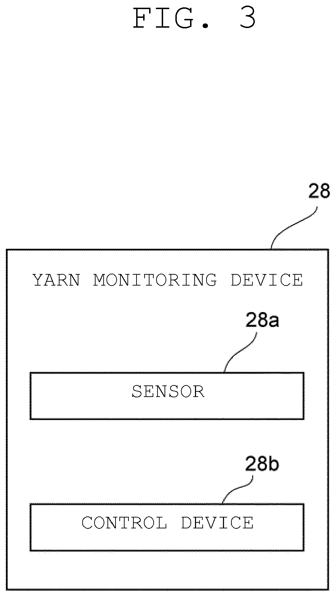

As illustrated in FIG. 3, the yarn monitoring device 28 includes a sensor 28a and a control device 28b. The sensor 28a monitors the yarn Y passing a slit formed in the yarn path of the yarn Y in the yarn monitoring device 28. The sensor 28a is a capacitance sensor adapted to detect a temporal change in the state of the yarn by the change in capacitance of when the yarn Y is passed through an electric field. The sensor 28a, for example, includes a pair of electrodes facing each other with the yarn Y inbetween and is adapted to measure a charge amount, which is the state of the yarn Y of when the yarn Y is passed between the electrodes.

The control device 28b calculates the thickness of the yarn based on the state of the yarn Y detected by the sensor 28a, and detects the presence/absence of the yarn defect. When detecting the yarn defect, the control device 28b outputs a yarn defect detection signal to the unit control section 10. The control device 28b outputs the detection result by the sensor 28a to the unit control section 10. A cutter 29 adapted to cut the yarn Y is arranged in proximity to the yarn monitoring device 28. The cutter 29 is activated by the yarn monitoring device 28.

The first catching and guiding device 30 catches the upper yarn when the yarn Y is in the disconnected state. The first catching and guiding device 30 can be swung (can be moved) from a standby position (solid line in FIG. 2) on the yarn supplying device 12 side to a catching position (chain line in FIG. 2) on the winding device 14 side by a control of the unit control section 10. The first catching and guiding device 30 is connected to a negative pressure source (not illustrated), and generates a suction flow. According to such configuration, the upper yarn sucking and catching section 33 catches the upper yarn at the catching position and returns to the standby position to guide the upper yarn to the yarn joining device 26.

The second catching and guiding device 32 can be swung (can be moved) from a standby position (solid line in FIG. 2) on the yarn supplying device 12 side to a catching position (chain line in FIG. 2) on the winding device 14 side by a control of the unit control section 10. The second catching and guiding device 32 is connected to a negative pressure source (not illustrated), and generates a suction flow. According to such configuration, the second catching and guiding device 32 catches the lower yarn and guides the lower yarn to the yarn joining device 26.

As described above, the winding unit 3 winds the yarn Y around the winding bobbin WB to form the package P. In the yarn joining operation by the yarn joining device 26, the yarn Y from the winding device 14 is caught by the first catching and guiding device 30, and the yarn Y from the yarn supplying device 12 is caught by the second catching and guiding device 32. The yarns Y caught by the first catching and guiding device 30 and the second catching and guiding device 32 are guided to the yarn joining device 26. In this case, the yarn Y is located in the slit of the yarn monitoring device 28. The yarn joining device 26 carries out the yarn joining operation of the introduced yarns Y.

The operation of the control device 28b of the yarn monitoring device 28 will now be described in detail.

The control device 28b reflects the information relating to the charge amount of the yarn Y on a monitoring process of the yarn monitoring device 28. In the present embodiment, the control device 28b uses the tension value of the yarn Y detected by the tension detecting device 24 as the information relating to the charge amount of the yarn Y. The charge amount of the static electricity in the yarn Y tends to become greater as the tension of the yarn Y becomes greater, and the charge amount of the static electricity in the yarn Y tends to become smaller as the tension of the yarn Y becomes smaller. In other words, when a strong resistance is applied on the travelling of the yarn Y by the tension applying device 22, the frictional force between the yarn Y and the tension applying device 22 increases. When the frictional force is increased, the charge amount of the yarn Y tends to become greater. Thus, the charge amount of the static electricity in the yarn Y thus can be grasped from the magnitude of the tension value. When static electricity is remaining in the yarn Y, the thickness of the yarn Y obtained from the charge amount detected by the sensor 28a and the actual thickness of the yarn Y do not match. The control device 28b corrects the state (thickness) of the yarn Y detected by the sensor 28a based on the tension value of the yarn Y so as to reduce such mismatch.

The control device 28b includes, for example, a table in which the tension value of the yarn Y and a proportion of the change in the thickness or the state of the yarn Y are corresponded. The control device 28b acquires the proportion of the change in thickness of the yarn Y corresponding to the tension value of the yarn Y with reference to the relevant table, and corrects the measurement value of the charge amount indicating the state (thickness) of the yarn Y output from the sensor 28a according to the proportion. The control device 28b monitors the state of the yarn Y based on a correction value. The tension value of the yarn Y is thereby reflected on the monitoring process of the yarn monitoring device 28.

As described above, the automatic winder 1 according to the present embodiment includes the tension detecting device 24 adapted to acquire the tension value of the yarn Y as the information relating to the charge amount of the yarn Y. The control device 28b then reflects the information relating to the charge amount of the yarn Y detected by the tension detecting device 24 on the monitoring process of the yarn monitoring device 28. Thus, in the automatic winder 1, the state of the yarn Y can be monitored in view of the influence the static electricity remaining in the yarn Y has on the detection accuracy of the thickness of the yarn Y by the capacitance sensor 28a, and the monitoring accuracy in the yarn monitoring device 28 can be enhanced.

In the automatic winder 1 according to the present embodiment, the information relating to the charge amount of the yarn Y is the tension value of the travelling yarn Y. In such a configuration, the information related to a factor that influences the charge amount of the yarn Y is acquired as the information relating to the charge amount of the yarn Y, and hence the state of the yarn Y can be appropriately monitored.

In the automatic winder 1 according to the present embodiment, the control device 28b corrects the state (thickness) of the yarn Y detected by the sensor 28a based on the information relating to the charge amount of the yarn Y. In this configuration, the thickness of the yarn Y can be detected with satisfactory accuracy by correcting the state of the yarn Y detected by the capacitance sensor 28a based on the information relating to the charge amount of the yarn Y.

An embodiment of the present invention has been described, but the present invention is not necessarily limited to the above-described embodiment, and various changes can be made within a scope of the invention, as defined by the claims.

In the embodiment described above, a mode in which the tension value of the yarn Y detected by the tension detecting device 24 is used for the information relating to the charge amount of the yarn Y has been described by way of example. However, a tension applying state by the tension applying device 22 may be used for the information relating to the charge amount of the yarn Y. Similar to the tension value of the yarn Y, the charge amount of the static electricity in the yarn Y can also be grasped from the tension applying state by the tension applying device 22. The tension applying state by the tension applying device 22 may be, for example, a set value of the tension to apply to the yarn Y in the tension applying device 22.

In the embodiment described above, humidity of the periphery of the yarn monitoring device 28 may be used for the information relating to the charge amount of the yarn Y. The charge amount of the yarn Y tends to become greater as the humidity becomes lower, and the charge amount of the yarn Y tends to become smaller as the humidity becomes higher. In such a configuration, the automatic winder 1 includes, for example, a hygrometer arranged at the periphery of the yarn monitoring device 28 as an acquiring device adapted to acquire the information relating to the charge amount of the yarn Y. Alternatively, the type of yarn Y may be used for the information relating to the charge amount of the yarn Y. The type of yarn Y is, for example, set for every lot in the machine control device 5. Furthermore, at least one of the tension value of the yarn Y, the tension applying state by the tension applying device 22, the humidity of the periphery of the yarn monitoring device 28, and the type of yarn Y merely needs to be used for the information relating to the charge amount of the yarn Y, and some or all of the above may be used in a combined manner.

In the embodiment described above, a mode in which the control device 28b corrects the state (thickness) of the yarn Y detected by the sensor 28a based on the information relating to the charge amount of the yarn Y has been described by way of example. Instead, however, the control device 28b may change a threshold value related to the determination on the yarn detection by the yarn monitoring device 28 based on the information relating to the charge amount of the yarn Y.

The information relating to the charge amount of the yarn Y can be reflected on the monitoring process of the yarn monitoring device 28 in this case as well. The threshold value related to the determination on the yarn defect detection is, for example, a clearing limit. The clearing limit is configured with a boundary line on whether or not to remove the yarn defect in a two-dimensional field having a length and a thickness of the yarn defect as coordinate axes, respectively. The control device 28b, for example, changes a boundary line according to the tension value of the yarn Y (information relating to the charge amount of the yarn Y). Alternatively, the control device 28b may include a plurality of clearing limits for every tension value of the yarn Y, and may select the clearing limit to use based on the tension value of the yarn Y.

In the embodiment described above, a mode in which the yarn winding machine is the automatic winder 1 has been described by way of example. However, the yarn winding machine may be a pneumatic spinning machine, an open end spinning machine, and the like. When the textile machine is the pneumatic spinning machine, the yarn supplying device is a pneumatic spinning device.

In the embodiment described above, a mode in which the control device 28b of the yarn monitoring device 28 reflects the information relating to the charge amount of the yarn Y on the monitoring process of the yarn monitoring device 28 has been described by way of example. However, the unit control section 10 may reflect the information relating to the charge amount of the yarn Y on the monitoring process of the yarn monitoring device 28.

In the embodiment described above, a mode in which the winding unit 3 includes the tension detecting device 24 has been described by way of example. However, the yarn monitoring device 28 may include a device adapted to detect the tension value of the yarn Y.

In the embodiment described above, a mode in which the display screen 5a and the input key 5b are separately configured in the machine control device 5 has been described by way of example. However, for example, in the machine control device 5, a touch panel display device may be used and the display section and the operation section may be configured as the same device.

In the embodiment described above, a mode in which a traverse groove is formed in the winding drum 18 and the yarn Y is traversed by the traverse groove has been described by way of example. However, the yarn Y may be traversed by an arm type, a belt type, or a rotary type traverse mechanism. In this case, a roller not formed with the traverse groove can be used as an auxiliary roller.

In the embodiment described above, a mode in which the state of the yarn Y is monitored in view of the influence the static electricity remaining in the yarn Y has on the detection accuracy of the sensor 28a by reflecting the information relating to the charge amount of the yarn on the monitoring process of the yarn monitoring device 28 has been described by way of example. Instead, however, the static electricity can be suppressed from remaining in the yarn Y by mechanically earthing the yarn Y. In such a configuration, the automatic winder 1 includes a neutralizing means adapted to neutralize the yarn Y at the upstream in the travelling direction of the yarn Y with respect to the yarn monitoring device 28. The neutralizing means is, for example, a metal member that is brought into contact with the yarn Y between the tension applying device 22 and the yarn monitoring device 28. Alternatively, the neutralizing means may be a metal member arranged on a discharging end side of the yarn Y in the tension applying device 22 to be brought into contact with the yarn Y. When the neutralizing means is arranged, the static electricity charged in the yarn Y is discharged, so that the static electricity remaining in the yarn Y can be suppressed from influencing the monitoring accuracy of the yarn monitoring device 28, and the monitoring accuracy in the yarn monitoring device 28 can be enhanced.

## Claims

1. A yarn winding machine (1) comprising:
a yarn supplying device (12) adapted to supply a yarn (Y);
a winding device (14) adapted to wind the yarn (Y) supplied from the yarn supplying device (12) to form a package (P);
a yarn monitoring device (28) including a capacitance sensor (28a) adapted to detect a state of the yarn (Y), and adapted to monitor a state of the travelling yarn (Y) using a detection result of the sensor (28a);
an acquiring device (24) adapted to acquire information relating to a charge amount of the yarn (Y); and
a control device (28b) adapted to reflect the information relating to the charge amount of the yarn (Y) acquired by the acquiring device (24) on a monitoring process of the yarn monitoring device (28); wherein the information relating to the charge amount of the yarn (Y) is at least one of a tension value of the travelling yarn (Y), a tension applying state by a tension applying device (22) adapted to apply tension on the yarn (Y), a humidity of a periphery of the yarn monitoring device (28), and a type of the yarn (Y); **characterized in that** the control device (28b) is configured to correct a state of the yarn (Y) detected by the sensor (28a) based on the information relating to the charge amount of the yarn (Y).

2. The yarn winding machine (1) according to claim 1,
wherein the yarn monitoring device (28) detects a yarn defect of the yarn based on the state of the yarn (Y) detected by the sensor (28a), and
the control device (28b) changes a threshold value related to a determination of a yarn defect detection by the yarn monitoring device (28) based on the information relating to the charge amount of the yarn (Y).

## Patentansprüche

1. Garnwicklungsmaschine (1), umfassend:
eine Garnzuführungsvorrichtung (12), die angepasst ist, um einen Garn (Y) zuzuführen;
eine Wicklungsvorrichtung (14), die angepasst ist, um den von der Garnzuführungsvorrichtung (12) zugeführten Garn (Y) zu wickeln, um ein Paket (P) zu bilden;
eine Garnüberwachungsvorrichtung (28), die einen Kapazitätssensor (28a) einschließt, der angepasst ist, um einen Zustand des Garns (Y) zu detektieren, und angepasst, um einen Zustand des wandernden Garns (Y) unter Verwendung eines Detektionsergebnisses des Sensors (28a) zu überwachen;
eine Erfassungsvorrichtung (24), die angepasst ist, um Informationen bezüglich einer Lademenge des Garns (Y) zu erfassen; und
eine Steuervorrichtung (28b), die angepasst ist, um die durch die Erfassungsvorrichtung (24) erfassten Informationen bezüglich der Lademenge des Garns (Y) auf einem Überwachungsprozess der Garnüberwachungsvorrichtung (28) widerzugeben; wobei die Informationen bezüglich der Lademenge des Garns (Y) mindestens eines von einem Spannungswert des wandernden Garns (Y), einem Spannungsanlegungszustand durch eine Spannungsanlegungsvorrichtung (22), die angepasst ist, um Spannung an den Garn (Y) anzulegen, einer Feuchtigkeit einer Umgebung der Garnüberwachungsvorrichtung (28), und einer Art des Garns (Y) ist; **dadurch gekennzeichnet, dass** die Steuervorrichtung (28b) konfiguriert ist, um einen Zustand des Garns (Y), der durch den Sensor (28a) detektiert wurde, basierend auf den Informationen bezüglich der Lademenge des Garns (Y) zu korrigieren.

2. Garnwicklungsmaschine (1) nach Anspruch 1,
wobei die Garnüberwachungsvorrichtung (28) einen Garnfehler des Garns basierend auf dem Zustand des Garns (Y), der durch den Sensor (28a) detektiert wurde, detektiert, und
die Steuervorrichtung (28b) einen Schwellenwert bezüglich einer Bestimmung einer Garnfehlerdetektion durch die Garnüberwachungsvorrichtung (28) basierend auf den Informationen bezüglich der Lademenge des Garns (Y) ändert.

## Revendications

1. Machine d'enroulement de fil (1) comprenant :
un dispositif d'alimentation en fil (12) adapté pour alimenter en fil (Y) ;
un dispositif d'enroulement (14) adapté pour enrouler le fil (Y) alimenté par le dispositif d'alimentation en fil (12) pour former un emballage (P) ;
un dispositif de surveillance de fil (28) incluant un capteur de capacité (28a) adapté pour détecter un état du fil (Y), et adapté pour surveiller un état du fil (Y) en mouvement en utilisant un résultat de détection du capteur (28a);
un dispositif d'acquisition (24) adapté pour acquérir des informations relatives à une quantité de charge du fil (Y) ; et
un dispositif de commande (28b) adapté pour refléter les informations relatives à la quantité de charge du fil (Y) acquises par le dispositif d'acquisition (24) sur un processus de surveillance du dispositif de surveillance de fil (28); dans laquelle les informations relatives à la quantité de charge du fil (Y) sont au moins l'une d'une valeur de tension du fil (Y) en mouvement, d'un état d'application de tension par un dispositif d'application de tension (22) adapté pour appliquer une tension sur le fil (Y), d'une humidité d'une périphérie du dispositif de surveillance de fil (28) et d'un type de fil (Y) ; **caractérisée en ce que** le dispositif de commande (28b) est configuré pour corriger un état du fil (Y) détecté par le capteur (28a) sur la base des informations relatives à la quantité de charge du fil (Y).

2. Machine d'enroulement de fil (1) selon la revendication 1,
dans laquelle le dispositif de surveillance de fil (28) détecte un défaut de fil du fil sur la base de l'état du fil (Y) détecté par le capteur (28a), et
le dispositif de commande (28b) modifie une valeur de seuil liée à une détermination d'une détection de défaut de fil par le dispositif de surveillance de fil (28) sur la base des informations relatives à la quantité de charge du fil (Y).
